(19) Europäisches Patentamt / European Patent Office / Office européen des brevets

(11) **EP 2 011 214 B1**

(12) **EUROPÄISCHE PATENTSCHRIFT**

(45) Veröffentlichungstag und Bekanntmachung des Hinweises auf die Patenterteilung:
**07.07.2010 Patentblatt 2010/27**

(51) Int Cl.:
***H02J 9/06*** *(2006.01)*

(21) Anmeldenummer: **07702903.1**

(22) Anmeldetag: **19.01.2007**

(86) Internationale Anmeldenummer:
**PCT/EP2007/000474**

(87) Internationale Veröffentlichungsnummer:
**WO 2007/121801 (01.11.2007 Gazette 2007/44)**

(54) **BATTERIESCHALTUNG IN EINEM NOTLICHTGERÄT**

BATTERY CIRCUIT IN AN EMERGENCY LIGHT DEVICE

CIRCUIT DE BATTERIE DANS UN APPAREIL D'ÉCLAIRAGE DE SECOURS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.04.2006 DE 102006018531**
**03.07.2006 DE 102006030655**

(43) Veröffentlichungstag der Anmeldung:
**07.01.2009 Patentblatt 2009/02**

(73) Patentinhaber: **TridonicAtco GmbH & Co. KG**
**6851 Dornbirn (AT)**

(72) Erfinder:
- **AZABANI, Saman**
  **County Durham, DL 16 6TE (GB)**
- **DIXON, Dave**
  **Tyne & Wear, NE28 9QZ (GB)**
- **ROHNER, Daniel**
  **1220 Wien (AT)**
- **MAIR, Alexander**
  **1220 Wien (AT)**

(74) Vertreter: **Rupp, Christian**
**Mitscherlich & Partner**
**Patent- und Rechtsanwälte**
**Sonnenstraße 33**
**80331 München (DE)**

(56) Entgegenhaltungen:
**EP-A1- 1 202 428     EP-A2- 0 948 241**
**US-A- 4 890 004     US-A- 5 444 378**
**US-A- 5 767 659**

- **CHEN Y-K ET AL: "A single-stage electronic ballast with emergency lighting features" 9. Februar 2003 (2003-02-09), APEC 2003. 18TH. ANNUAL IEEE APPLIED POWER ELECTRONICS CONFERENCE AND EXPOSITION. MIAMI BEACH, FL, FEB. 9 - 13, 2003, ANNUAL APPLIED POWER ELECTRONICS CONFERENCE, NEW YORK, NY : IEEE, US, PAGE(S) 1185-1190 , XP010631662 ISBN: 0-7803-7768-0 das ganze Dokument**

**Beschreibung**

Die vorliegende Erfindung betrifft ein Notlichtgerät gemäß dem Oberbegriff des Anspruchs 1, welches zum Betreiben einer Lichtquelle, insbesondere einer LED vorgesehen ist.

Notlichtgeräte sind unerlässlich, um in größeren Gebäuden oder Komplexen Beleuchtungssysteme zu realisieren, welche auch im Falle des Ausfalls der allgemeinen Netzversorgung eine ausreichende Beleuchtung zur Verfügung stellen. Nur dann, wenn im Falle des Ausfalls der Stromversorgung oder anderen Notfällen bestimmte relevante Räumlichkeiten oder Bereiche nach wie vor ausgeleuchtet werden, können Evakuierungs- oder Hilfsmaßnahmen sicher durchgeführt werden. Dementsprechend werden derartige Notlichtgeräte insbesondere zum Ausleuchten von Fluchtwegen und dergleichen eingesetzt.

Notlichtgeräte der gattungsgemäßen Art (wie sie schon aus EP-A-1202428 und EP-A-0948241 bekannt sind) weisen dementsprechend als zentrales Element eine Energiespeichereinheit, insbesondere eine Batterie bzw. einen Akkumulator auf, welche während eines Normal- bzw. Ladebetriebs durch die allgemeine Netzversorgungsspannung aufgeladen wird. Hierzu ist eine Ladeschaltung vorgesehen, welche eingangsseitig mit der Netzversorgungsspannung verbunden ist und während des Ladebetriebs der Energiespeichereinheit permanent Energie zuführt, welche diese speichert. Erst im Falle des Auftretens eines Notzustands, der von derartigen Geräten durch eine Überwachung der Netzversorgungsspannung üblicherweise selbständig erkannt wird, wird in einen Notlichtbetrieb gewechselt, in dem die Lichtquelle aktiviert und betrieben wird, wozu - sofern erforderlich - die von der Energiespeichereinheit zur Verfügung gestellte Energie genutzt wird. Da die Speicherkapazität der Energiespeichereinheit selbstverständlich begrenzt ist, werden vorzugsweise Lichtquellen eingesetzt, welche verhältnismäßig wenig Energie verbrauchen. Dementsprechend werden derartige Notlichtgeräte bevorzugt mit Gasentladungslampen, insbesondere Leuchtstoffröhren ausgestattet. Zunehmend finden allerdings auch Lichtquellen in Form von lichtemittierenden Halbleitern, insbesondere LEDs Verwendung, da auch diese Lichtquellen einen hohen Wirkungsgrad aufweisen und dementsprechend energiesparend eingesetzt werden können.

Die Überwachung der Netzversorgungsspannung, welche also vorgenommen wird, um rechtzeitig einen Notlichtbetrieb veranlassen zu können, erfolgt üblicherweise durch eine Steuereinheit, welche ihr zugeführte Signale auswertet und anhand dieser Signale den Zustand der Netzversorgungsspannung beurteilt. Bei bekannten Schaltungen wird hierzu in naheliegender Weise die Netzversorgungsspannung selbst gemessen. Hieraus ergibt sich dann allerdings das Problem, dass die Sensorik zum Ermitteln des Zustands der Netzversorgungsspannung auf Netzpotential liegt und von den übrigen Schaltungsbereichen des Notlichtgeräts, welche auf dem Spannungsniveau der Energiespeichereinheit oder LED liegen, galvanisch getrennt werden muss. Die hierzu erforderliche Potentialtrennung ist nicht nur teuer, sondern beansprucht darüber hinaus auch verhältnismäßig viel Platz in dem Notlichtgerät.

Der vorliegenden Erfindung liegt nunmehr die Aufgabe zugrunde, ein verbessertes Konzept für ein Notlichtgerät anzugeben, bei dem die vorstehend beschriebenen Nachteile vermieden sind.

Diese Aufgabe wird durch die Merkmale des unabhängigen Anspruchs gelöst. Vorteilhafte Weiterbildungen der Erfindung sind Gegenstand der Unteransprüche.

Im Gegensatz zu bekannten Lösungen kann die Netzversorgungsspannung indirekt überwacht werden, um gegebenenfalls einen Notlichtbetrieb zu veranlassen. Hierzu werden lediglich Messwerte auf dem Potential der Energiespeichereinheit oder LED erfasst und auf Basis dieser Messwerte mit Hilfe von weiteren Informationen auf den Zustand der Netzversorgungsspannung zurück geschlossen.

Gemäss einem ersten Aspekt der Erfindung weist ein Notlichtgerät zum Betreiben einer Lichtquelle, insbesondere einer LED, auf:

- eine Batterie,
- eine mit einer Netzversorgungsspannung zu versorgende Ladeschaltung zum Laden der Batterie, sowie
- eine während eines Notlichtbetriebs durch die Batterie versorgte Treiberschaltung zum Betreiben der Lichtquelle.

Dabei ist ein Schalter in Serie zu der Batterie geschaltet, über den die Batterie selektiv abtrennbar ist.

Der Schalter in Serie zu der Batterie kann ein als Linearregler von der Steuereinheit betreibbarer Transistor sein.

Bei einer detektierten Tiefentladung der Batterie kann der Schalter in Serie zu der Batterie in einen gepulsten Betrieb angesteuert werden.

Zur Erfassung der Tiefentladung der Batterie kann eine diskrete Batteriespannung-Erfassungsschaltung vorgesehen sein.

Ein Messwiderstand kann in Serie zu dem Schalter geschaltet sein, der in Serie zu der Batterie (4) geschaltet ist.

Ein weiterer Aspekt der Erfindung bezieht sich auf ein Notlichtgerät zum Betreiben einer Lichtquelle, insbesondere einer LED, wobei das Notlichtgerät (1) aufweist:

- eine Batterie,
- eine mit einer Netzversorgungsspannung zu versorgende Ladeschaltung zum Laden der Batterie während eines Ladebetriebs, sowie
- eine während eines Notlichtbetriebs durch die Energiespeichereinheit (4) versorgte Treiberschaltung zum Betreiben der Lichtquelle.

Ein Messwiderstand ist in Serie zu der Batterie geschaltet, mittels dem sowohl der Batterieladestrom wie auch der Batterieentladestrom erfasst wird.

Das Batteriestromsignal kann dabei mit einem Offset beaufschlagt werden, so dass sowohl der Batterieladestrom wie auch der Batterieentladestrom als Signale gleicher Polarität, aber unterschiedlicher Amplitude auswertbar sind.

Die Offset-Beaufschlagung des Batteriestroms kann durch einen Operationsverstärker erfolgen.

Vorzugsweise weist die Ladeschaltung einen steuerbaren Schalter sowie einen Transformator auf, wobei die Ladeschaltung insbesondere durch einen sogenannten Flyback-Konverter gebildet sein kann. Der steuerbare Schalter wird durch die Steuereinheit des Notlichtgeräts angesteuert, wobei hier die Ansteuerung insbesondere über einen Optokoppler erfolgen kann.

Der Zustand der Netzversorgungsspannung wird nunmehr insbesondere unter Berücksichtigung des von der Steuereinheit gewählten Duty-Cycles zur Ansteuerung des Schalters des Flyback-Konverters bzw. der Ladeschaltung ermittelt. Ferner wird hierzu die Sekundärspannung des Flyback-Konverters bzw. bei anderen Schaltnetzteil-Topologien die Ladeleistung für die Energiespeichereinheit berücksichtigt. Diese Ladeleistung kann während des Ladebetriebs, also bei ausgeschalteter Lichtquelle, in einfacher Weise durch die Steuereinheit ermittelt werden kann, da die hierzu zu messenden Werte, nämlich Spannung und Strom der Energiespeicherschaltung sich auf das gleiche Basispotential beziehen, auf dem auch die weiteren Komponenten des Notlichtgeräts liegen. Gleiches gilt auch für die im Falle der Verwendung des Flyback-Konverters zu messende Sekundärspannung. In beiden Fällen kann also die beim Stand der Technik erforderliche galvanische Trennung zwischen den Messeinrichtungen und der Steuereinheit entfallen.

Eine andere vorteilhafte Weiterbildung der vorliegenden Erfindung bezieht sich auf die Maßnahmen zum Betreiben der Lichtquelle, insbesondere der LED während des Notlichtbetriebs. Hierzu ist die Treiberschaltung vorzugsweise als Schaltregler ausgebildet und weist dementsprechend einen weiteren steuerbaren Schalter auf, welcher wiederum durch die Steuereinheit angesteuert wird. Die Ansteuerung der Schalters ist dabei derart, dass die Lichtquelle unabhängig vom Ladezustand der Energiespeichereinheit mit einer konstanten Leistung oder konstantem Strom betrieben werden kann. Diese Maßnahme ist von besonderer Bedeutung, da die Leistung der Energiespeichereinheit selbstverständlich im Laufe der Zeit sinkt, was sich allerdings nicht auf die Lichtintensität des Notlichtgeräts auswirken sollte.

Im Falle der Nutzung einer LED als Lichtquelle wäre es dementsprechend wiederum naheliegend, den Diodenstrom selbst, der die Lichtleistung bestimmt, zu erfassen, um die angestrebte Leistungsregelung zu ermöglichen. Gemäß einer besonders vorteilhaften Weiterbildung der vorliegenden Erfindung ist allerdings vorgesehen, dass die Messung des Diodenstroms entfällt und stattdessen der Strom bzw. die Leistung der Lichtquelle anhand anderer Parameter indirekt gemessen bzw. abgeschätzt wird. Insbesondere wird vorzugsweise lediglich die an der Lichtquelle anliegende Spannung ermittelt und dann der Diodenstrom aus weiteren Informationen abgeleitet, wobei hierbei insbesondere die Verlustleistung der Treiberschaltung berücksichtigt wird. Mittels zuvor bestimmter und in der Steuereinheit hinterlegter Abgleichtabellen kann dann ohne eine direkte Messung des Diodenstroms die Leistung der Lichtquelle bestimmt werden, so dass eine nahezu konstante Lichtleistung durch die Steuereinheit eingestellt werden kann. Die Regelung der Lichtleistung erfolgt hierbei insbesondere durch eine entsprechende Taktung des steuerbaren Schalters der Treiberschaltung, da auf diesem Wege in sehr einfacher und eleganter Weise die Leistung, mit der die Lichtquelle betrieben wird, eingestellt werden kann.

Diese besondere Maßnahme zum Betreiben der Lichtquelle bei einer nahezu konstanten Leistung, wobei auf eine direkte Messung des Stroms verzichtet wird, kann im Übrigen auch unabhängig von dem eingangs beschriebenen erfindungsgemäßen Gedanken der indirekten Überwachung der Netzversorgung genutzt werden.

Nachfolgend soll die Erfindung anhand der beiliegenden Zeichnung näher erläutert werden. Es zeigen:

Fig. 1    schematisch das Schaltbild eines ersten Ausführungsbeispiels eines erfindungsgemäßen Notlichtgeräts;

Fig. 2    ein zweites Ausführungsbeispiel eines Notlichtgeräts;

Fig. 3    eine Grafik zur Ermittlung der Netzversorgungsspannung auf Basis von an der Ausgangsseite der Ladeschaltung gemessenen Betriebsparametern,

Fig. 4    eine weitere Grafik zur Ermittlung der Sekundärleistung der Ladeschaltung, welche zur indirekten Bestimmung der Lichtquellenleistung berücksichtigt wird, und

Fig. 5    eine Illustration einer erfindungsgemässen Batterieschaltung.

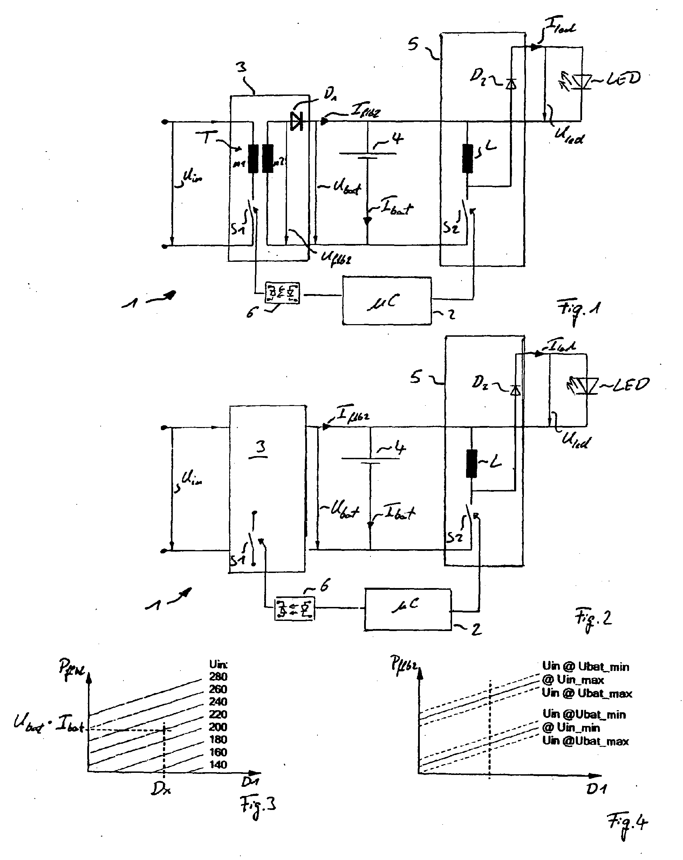

Das in Fig. 1 in vereinfachter Weise dargestellte und allgemein mit dem Bezugzeichen 1 versehene erfindungsgemäße Notlichtgerät ist im dargestellten Ausführungsbeispiel zum Betreiben einer LED als Notlichtquelle vorgesehen. Das Notlichtgerät 1 ist eingangsseitig an ein Stromversorgungsnetz angeschlossen, welches eine Netzversorgungsspannung $U_{in}$ zur Verfügung stellt, und weist als wesentliche Komponenten eine Steuereinheit 2, eine Ladeschaltung 3, eine Energiespeichereinheit 4 in Form einer Batterie bzw. eines Akkumulators sowie eine Treiberschaltung 5 auf.

Die Ladeschaltung 3 ist im dargestellten ersten Ausführungsbeispiel durch einen sog. Flyback-Konverter gebildet, der einerseits einen Transformator T mit einer Primärwicklung n1 und einer Sekundärwicklung n2 sowie andererseits einen steuerbaren Schalter S1 aufweist. In bekannter Weise kann durch ein entsprechendes abwechselndes Öffnen und Schließen des Schalter S1 die von der Netzversorgungsspannung $U_{in}$ zur Verfügung gestellte Energie auf die Sekundärseite des Flyback-Konverters 3 übertragen und zum Aufladen der Energiespeichereinheit 4 genutzt werden. Die Energieübertragung findet dabei im geöffneten Zustand des Schalters S1 statt, wobei hierzu auf der Ausgangsseite des Flyback-Konverters 3 ferner eine Diode $D_1$ vorgesehen ist. Derartige Flyback-Schaltungen finden aufgrund ihres einfachen Aufbaus und ihrer zuverlässigen Funktion in derartigen Notlichtgeräten vielfach Verwendung.

Die Ansteuerung des steuerbaren Schalters S1 erfolgt durch die Steuereinheit 2 des Notlichtgeräts, wobei die Ansteuerung insbesondere galvanisch getrennt über einen Optokoppler 6 erfolgt. Die Steuereinheit 2 steuert hierbei den Schalter S1 alternierend an, wobei sich der sog. Duty-Cycle D1 für den Schaltbetrieb des Schalters S1 wie folgt berechnet:

$$D1 = t_{on1}/(T - t_{on1})$$

$t_{on1}$ entspricht hierbei der Einschaltzeit des Schalters, während T die Gesamtdauer eines vollständigen Schaltzyklus für den Schalter S1 bezeichnet.

Denkbar ist auch, dass es sich bei der Ansteuerung von S1 um einen 'Freischwinger' handelt und über den Duty-cycle vom Optokoppler 6 die Eigenfrequenz des 'Freischwinger' beeinflusst wird.

Während eines Ladebetriebs des Notlichtgeräts 1 ist üblicherweise ausschließlich die Ladeschaltung 3 aktiv, um die Batterie 4 dauerhaft aufzuladen. Erst für den Fall, dass ein Notzustand vorliegt, der insbesondere durch Abweichungen in der Netzversorgungsspannung $U_{in}$ von vorbestimmten Soll-Werten gekennzeichnet ist, wird ein Notlichtbetrieb eingeleitet, in dem die Treiberschaltung 5 dazu genutzt wird, die LED anzusteuern. Die als Schaltregler ausgebildete Treiberschaltung 5 weist hierzu einen weiteren steuerbaren Schalter S2, eine Induktivität L sowie eine Diode $D_2$ auf. Durch alternierendes Ansteuern des Schalters S2 durch die Steuereinheit 2 wird auf diese Weise der LED ein Strom zur Verfügung gestellt, über welchen diese betrieben wird. Das Tastverhältnis, mit dem der Schalter S2 durch die Steuereinheit 2 angesteuert wird, kann dabei variiert werden, um die Höhe des der LED zugeführten Stroms und damit die Leistung, bei welcher die LED betrieben wird, einzustellen. Auf diese Weise kann in sehr eleganter Weise sichergestellt werden, dass auch bei schwankender Batterieleistung die LED trotz allem mit gleichbleibender Helligkeit betrieben wird.

Eine erste wesentliche Funktion des Notlichtgeräts 1 besteht also darin, durch Beurteilung der Netzversorgungsspannung $U_{in}$ zu erkennen, ob ein Notzustand vorliegt, um ggf. einen Notlichtbetrieb zu veranlassen. Bislang war es bekannt, hierzu unmittelbar den Wert der Eingangsspannung $U_{in}$ für die Ladeschaltung 3 zu bestimmen, was allerdings aus den zuvor genannten Gründen mit Nachteilen verbunden ist.

Bevorzugt wird auf eine direkte Messung der Netzversorgungsspannung $U_{in}$ verzichtet. Stattdessen ist vorgesehen, diese auf indirektem Wege zu ermitteln. Insbesondere ist vorgesehen, das lediglich Größen von Betriebsparametern des Notlichtgeräts 1 auf der Sekundärseite der Ladeschaltung 3 gemessen werden.

Bei dem ersten Ausführungsbeispiel gemäß Fig. 1 wird hierzu die auf der Sekundärseite des Sperrwandlers bzw. Flyback-Konverters 3 anliegende Spannung $U_{flb2}$ nach der Diode D1 gemessen, wozu insbesondere keine galvanische Trennung erforderlich ist, da diese Größe auf dem gleichen Bezugspotential liegt, wie die Steuereinheit 2, welchen den Messwert auswertet.

Alternativ kann auch die Spannung der Sekundärwicklung des Flyback-Konverters gemessen werden.

Ist nun die Höhe dieser Sekundärspannung $U_{flb2}$ bekannt, so kann ausgehend hiervon auf die Höhe der Eingangsspannung $U_{in}$ zurückgeschlossen werden. Bei eingeschaltetem Schalter S1 des Flyback-Konverters 3 besteht nämlich ein Zusammenhang zwischen Eingangsspannung $U_{in}$ und Sekundärspannung $U_{flb2}$, der insbesondere von dem Wicklungsverhältnis zwischen den beiden Wicklungen n1 und n2 des Transformators T sowie von dem Duty-Cycle des Schalters D1 abhängig ist. Dieser Zusammenhang zwischen der einfach zu messenden Sekundärspannung $U_{flb2}$ und der zu überwachenden Eingangsspannung $U_{in}$ ist nunmehr in Form einer Wertetabelle in der Steuereinheit 2 hinterlegt, so dass diese nach Messung der Sekundärspannung $U_{flb2}$ in einfacher Weise die Höhe der Eingangsspannung $U_{in}$ bestimmen kann, ohne diese direkt messen zu müssen. Stellt nun die Steuereinheit 2 fest, dass die ermittelte Eingangsspannung $U_{in}$ außerhalb bestimmter Sollwert-Bereiche liegt, so deutet dies auf einen Notzustand hin, was die Steuereinheit 2 wiederum dazu veranlassen wird, einen Notbetrieb einzuleiten.

Die beschriebene Lösung ermöglicht also eine sehr einfache aber effektive Überwachung des Zustands der allgemeinen Stromversorgung. Ferner besteht ein besonderer Vorteil des in Fig. 1 dargestellten Ausführungsbeispiels darin, dass die Höhe der Eingangsspannung $U_{in}$ unabhängig davon bestimmt werden kann, ob die Notlicht-LED eingeschaltet ist oder nicht. Die Diode $D_1$ bewirkt nämlich durch ihre Sperrwirkung eine Trennung zwischen Sekundärspannung $U_{flb2}$ und Batteriespannung $U_{Bat}$, so dass sich die Tätigkeit der Treiberschaltung 3 nicht auf den vorbeschriebenen Vorgang der

Bestimmung der Eingangsspannung $U_{in}$ auswirkt.

Ein zweites, etwas allgemeineres Ausführungsbeispiel eines erfindungsgemäßen Notlichtgeräts ist in Fig. 2 dargestellt. Dieses entspricht in seinem Aufbau im Wesentlichen dem in Fig. 1 gezeigten Notlichtgerät 1, allerdings ist nunmehr die Ladeschaltung 3 nicht durch einen Flyback-Konverter sondern generell durch eine Schaltungsanordnung gebildet, welche eine Potentialtrennung sowie einen wiederum durch die Steuereinheit 2 angesteuerten Schalter S1 aufweist.

Bei dieser allgemeineren Ausführungsform besteht nicht zwangläufig ein bekannter Zusammenhang zwischen der Eingangsspannung $U_{in}$ und der Spannung auf der Ausgangsseite der Ladeschaltung 3. Dennoch kann auch hier die Höhe der Eingangsspannung $U_{in}$ auf indirektem Wege bestimmt werden, wobei hierzu nunmehr allerdings andere Betriebsgrößen gemessen werden.

Es handelt sich hierbei einerseits um die Batteriespannung $U_{bat}$ sowie andererseits um den Batteriestrom $I_{bat}$. Beide Größen können wiederum verhältnismäßig einfach, also ohne galvanische Trennung bestimmt werden, da sie wiederum ebenso wie die Steuereinheit 2, welche diese Messgrößen auswertet, auf dem gleichen Bezugspotential liegen.

Auf Basis dieser beiden Messgrößen $U_{bat}$ und $I_{bat}$ sowie des bekannten Duty-Cycles D1 für den Schalter S1 der Ladeschaltung 3 kann dann die Eingangsspannung $U_{in}$ bestimmt werden, da diese mit den drei bekannten Größen in einer Beziehung steht. Dies verdeutlicht die Grafik von Fig. 3, welche unterschiedliche Kennlinien der Sekundärleistung $P_{flb2}$ der Ladeschaltung 3 in Abhängigkeit von dem Duty-Cycle D1 für den Schalter S1 zeigt. Diese Kennlinien werden beispielsweise bei der Herstellung des Notlichtgeräts ermittelt und wiederum in Form einer Tabelle in der Steuereinheit 2 hinterlegt. Es ist erkennbar, dass diese Kennlinien insbesondere auch von der Eingangsspannung $U_{in}$ abhängig sind. Sind nunmehr also der Duty-Cycle D1 sowie die Sekundärleistung $P_{flb2}$ der Ladeschaltung 3 bekannt, so kann ebenso wie bei dem Beispiel von Fig. 1 auf die Höhe der Eingangsspannung $U_{in}$ zurück geschlossen werden.

Im dargestellten Beispiel von Fig. 3 wird also ermittelt, mit welcher Kennlinie die bekannte Kombination aus Duty-Cycle D1 und Sekundärleistung $P_{flb2}$ der Ladeschaltung 3, welche bei deaktivierter Treiberschaltung 5 dem Produkt aus Batteriespannung $U_{bat}$ und Batteriestrom $I_{bat}$ entspricht, übereinstimmt. Bei den dargestellten Messwerten beispielsweise liegt dieser Wert auf der Kennlinie für eine Eingangsspannung $U_{in}$ von 220 Volt, was einem ordnungsgemäßen Zustand der allgemeinen Netzversorgung entspricht. Würde allerdings der ermittelte Wert auf einer Kennlinie liegen, die beispielsweise einer Eingangsspannung $U_{in}$ von 140 Volt oder 280 Volt entspricht, so würde dies die Steuereinheit 2 wiederum dahingehend interpretieren, dass ein Fehler in der Netzversorgung vorliegt und dementsprechend einen Notzustand einleiten.

In beiden gezeigten Ausführungsbeispielen kann also zuverlässig und ohne das Erfordernis einer direkten Messung der Eingangsspannung $U_{in}$ festgestellt werden, ob die Netzversorgung in Ordnung ist oder nicht. Eine Einschränkung bei dem Beispiel von Fig. 2 besteht allerdings darin, dass die beschriebene Bestimmung der Eingangsspannung $U_{in}$ nur im ausgeschalteten Zustand der Treiberschaltung 5 möglich ist. Bei dem Beispiel von Fig. 1 hingegen besteht diese Einschränkung - wie bereits erwähnt - nicht. Grundsätzlich allerdings wird die Steuereinheit 2 im Falle des Erkennens eines Fehlers eine Aktivierung der Treiberschaltung 5 und dementsprechend ein Einschalten der LED veranlassen.

Nach Aktivieren der Treiberschaltung 5 kann dann in der zuvor beschriebenen Weise der Schalter S2 hochfrequent angesteuert werden, um die LED mit einer gewünschten Leistung zu betreiben. Um in diesem Fall sicherzustellen, dass die Leistung der LED konstant ist, wäre es erforderlich, sowohl die LED-Spannung $U_{led}$ als auch den LED-Strom $I_{led}$ zu kennen, um eine Regelung zu ermöglichen. Gemäß einer besonderes vorteilhaften Weiterbildung wird allerdings lediglich die LED-Spannung $U_{led}$ gemessen und der Strom $I_{led}$ bzw. die sich damit ergebende Leistung $P_{led}$ durch die Steuereinheit 2 indirekt ermittelt, was nachfolgend näher erläutert werden soll.

Um den Diodenstrom $I_{led}$ indirekt bestimmen zu können, werden nunmehr zumindest die Größen "Batteriespannung" $U_{bat}$, "Batteriestrom" $I_{bat}$ und - Falle des Beispiels von Fig. 1 - Sekundärspannung $U_{flb2}$ sowie zusätzlich die LED-Spannung $U_{led}$ gemessen. Hieraus können dann die weiteren Informationen, welche zur Regelung des LED-Stroms $I_{led}$ benötigt werden, berechnet werden, wozu allerdings noch weitere Informationen erforderlich sind, welche nicht durch Istwert-Messungen erfasst werden, sondern als Wertetabellen in der Steuereinheit 2 hinterlegt sind.

Die erste Wertetabelle ist die bereits oben erwähnte Information hinsichtlich des Zusammenhangs zwischen Duty-Cycle D1, Sekundärspannung $U_{flb2}$ und Eingangsspannung $U_{in}$ bei dem Beispiels von Fig. 1 bzw. zwischen Duty-Cycle D1, Batteriespannung $U_{bat}$, Batteriestrom $I_{bat}$ und Eingangsspannung $U_{in}$ bei dem allgemeineren Beispiel von Fig. 2. Ferner muss zum Ermitteln des Diodenstroms auch die Verlustleistung $P_{lost}$ der Treiberschaltung 5 bekannt sein, welche von der Differenz zwischen der gemessenen LED-Spannung $U_{led}$ und der ebenfalls gemessenen Batteriespannung $U_{bat}$ abhängig ist, so dass gilt:

$$P_{lost} = f\left(U_{led} - U_{bat}\right)$$

Die dritte benötigte Information schließlich ist die im Falle einer aktivierten Treiberschaltung vorliegende Sekundärleistung $P_{flb2}$ der Ladeschaltung 3, welche eine Funktion des Duty-Cycles D1, der Eingangsspannung $U_{in}$ sowie der Batteriespannung $U_{bat}$ ist. Der Zusammenhang zwischen diesen Größen ist in Fig. 4 dargestellt, wobei erkennbar ist, dass die Sekundärleistung $P_{flb2}$ der Ladeschaltung 3 primär von der Eingangsspannung $U_{in}$ und dem Duty-Cycle D1 für den Schalter S1 abhängig ist, darüber hinaus allerdings auch noch auf Grund der Batteriespannung $U_{bat}$ variieren kann.

Ist nun aufgrund der zuvor beschriebenen Maßnahmen die Eingangsspannung $U_{in}$ (ggf. bei dem Beispiel von Fig. 2 zunächst bei abgeschalteter Treiberschaltung 5) ermittelt worden, so kann anhand des Zusammenhangs in Fig. 4 auch bei aktivierter Treiberschaltung 5 die Sekundärleistung $P_{flb2}$ der Ladeschaltung 3 ermittelt werden. Bekannt sind dann also die gemessenen Größen Batteriespannung $U_{bat}$, Batteriestrom $I_{bat}$, ggf. Sekundärspannung $U_{flb2}$ und LED-Spannung $U_{led}$, der durch die Steuereinheit vorgegebene Duty-Cycle D1 für den Schalter S1, sowie die anhand der hinterlegten Wertetabellen bestimmten weiteren Größen Eingangsspannung $U_{in}$, Sekundärleistung $P_{flb2}$ der Ladeschaltung 3 sowie Verlustleistung $P_{lost}$ der Treiberschaltung 5.

Die Kenntnis dieser Größen wiederum ermöglicht gemäß dem folgenden Zusammenhang zunächst die Bestimmung des Stroms $I_{flb2}$ auf der Sekundärseite der Ladeschaltung 3:

$$I_{flb2} = P_{flb2} / U_{bat}$$

Schließlich können auch der LED-Strom $I_{led}$ und die LED-Leistung $P_{led}$ nach folgenden Gleichungen berechnet werden:

$$I_{led} = \left( P_{flb2} - U_{bat} \cdot I_{bat} - P_{lost} \right) / U_{led}$$

$$P_{led} = P_{flb2} - U_{bat} \cdot I_{bat} - P_{lost} .$$

Beide Gleichungen gelten für den Fall, dass die Ladeschaltung 3 nach wie vor aktiv ist, also zumindest noch eine gewisse Stromversorgung zur Verfügung steht. Dies kann beispielsweise der Fall sein, wenn ein Notlichtbetrieb anderweitig veranlasst wurde. Für den Fall hingegen, dass die Stromversorgung vollständig ausfällt und der Notlichtbetrieb ausschließlich durch die Batterie aufrechterhalten wird, gelten die vereinfachten Gleichungen:

$$I_{led} = \left( U_{bat} \cdot I_{bat} - P_{lost} \right) / U_{led}$$

$$P_{led} = U_{bat} \cdot I_{bat} - P_{lost}$$

Letztendlich können also der aktuelle Ist-Wert des LED-Stroms $I_{led}$ sowie die aktuelle Leistung $P_{led}$ auf indirektem Wege ermittelt und zur Regelung genutzt werden. Die entsprechenden Berechnungen werden durch die Steuereinheit 2 durchgeführt.

Der Vorteil dieser indirekten Bestimmungen der zur Regelung erforderlichen Istwerte besteht darin, dass auf eine Messung eines zusätzlichen Betriebsparameters des Notlichtgeräts verzichtet werden kann, was wiederum zu einer weiteren Vereinfachung des Geräts insgesamt führt. Da hierbei ohnehin zum Teil auf bereits zur Bestimmung der Eingangsspannung ermittelte bzw. gemessene Parameter zurückgegriffen werden kann, stellt diese indirekte Bestimmung des LED-Stroms also eine besonders vorteilhafte Weiterbildung des eingangs beschriebenen Gedankens der indirekten Bestimmung der Eingangspannung dar. Allerdings könnte eine entsprechende indirekte Strom- und Leistungsbestimmung für die Lichtquelle auch bei anderen Geräten zum Einsatz kommen, bei denen der erste erfindungsgemäße Gedanke nicht verwirklicht ist. Beispielsweise ist diese Vorgehensweise u.a. bei Notlichtgeräten sinnvoll, bei denen ein Notzustand alternativ oder ergänzend zur Überwachung der Stromversorgung auch anderweitig signalisiert werden kann. So könnte bei dem erfindungsgemäßen Notlichtgerät beispielsweise auch über einen separaten Steuereingang ein Notsignal z.B. von einem Feuermelder oder einer anderen Steuereinrichtung übermittelt werden, um durch ein externes Signal einen Notlichtbetrieb zu veranlassen.

Eine andere Weiterbildung schließlich betrifft die zuvor erwähnten und in der Steuereinheit hinterlegten Wertetabellen, welche zur indirekten Bestimmung der Eingangsspannung und des Dioden-Stroms erforderlich sind. Wie bereits erwähnt wurde, können diese Wertetabellen bereits bei der Herstellung des Notlichtgeräts in der Steuereinheit gespeichert werden. Alternativ oder ergänzend hierzu wäre es allerdings auch denkbar, diese Informationen nachträglich einzuschreiben bzw. zu einem späteren Zeitpunkt zu aktualisieren. Hierfür könnte z.B. ein in dem Notlichtgerät vorgesehenes digitales Interface genutzt werden, welches üblicherweise zur Fehlersignalisierung und Überwachung genutzt wird. Mit Hilfe dieses Interfaces könnten nunmehr unter Nutzung eines erweiterten Befehlssatzes neue Wertetabellen in die Steuereinheit eingeschrieben werden. Dieses nachträgliche Einschreiben neuer Informationen ist beispielsweise sinnvoll, um neue Soll- bzw. Toleranzwerte für die Eingangsspannung vorzugeben oder auch die Informationen zur Ermittlung der nicht direkt gemessenen Größen an die angeschlossene Batterie anzupassen. Hierdurch kann also das Notlichtgerät hinsichtlich seines Verhaltens jederzeit an neue Umstände angepasst werden.

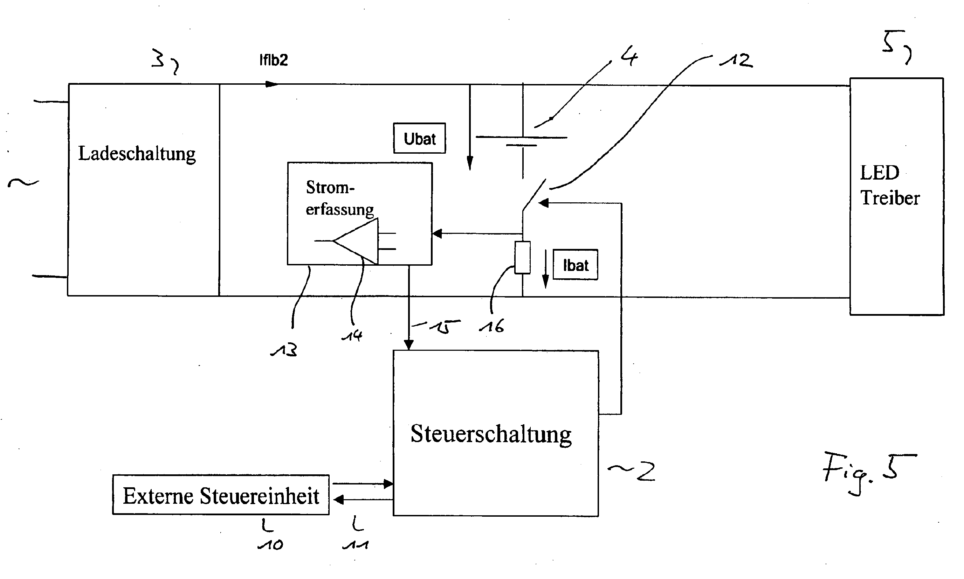

Bezug nehmend auf Figur 5 sollen nunmehr Einzelheiten der Verschaltung der Batterie 4 erläutert werden.

Wie in Figur 5 ersichtlich, ist parallel zu der Batterie 4 ein Element 12 verschaltet, dass die Funktion eines Linearreglers oder Schaltreglers und/oder eines Schalters aufweisen kann. Beispielsweise kann dieses Element 12 ein Transistor sein. Parallel zu der Batterie 4 ist weiterhin ein Messwiderstand (Shunt) 16 geschaltet, so dass der Spannungsabfall an dem Shunt 16 repräsentativ für den Batteriestrom ist.

Das an dem Shunt 16 abgegriffene Messsignal wird einer Stromerfassungseinheit 13 zugeführt, die vorzugsweise als diskrete Schaltung aufgebaut ist und einen Komparator 14 aufweisen kann. Der Komparator 14 ist nur ein Beispiel dafür, wie ein Offset auf das Messsignal vom Shunt 16 beaufschlagt werden kann. Die Beaufschlagung des Offsets dient dazu, in vereinfachter Weise den Batteriestrom wiedergebende Signale mit unterschiedlichen Polaritäten auswerten zu können, in dem der Offset so gewählt ist, dass die Signalpegel so verschoben werden, dass beide Signalpolaritäten nunmehr die gleiche Polarität und dafür unterschiedliche Amplituden aufweisen.

Somit lässt sich in verhältnismäßig einfacher Weise beispielsweise durch die Steuerschaltung 2 sowohl der Batterieladestrom wie auch der Batterieentladestrom messen, die bekanntlich unterschiedliche Polaritäten haben. Der Steuerschaltung 2 wird also somit bevorzugt ein Messsignal 15 mit einheitlicher Polarität zugeführt.

Im übrigen lässt sich auch somit eine Verpolung der Anschlüsse der Batterie 4 erfassen. In diesem Fall kann vorgesehen sein, dass die Batterie abgetrennt wird. Der Betrieb kann somit noch über die Netzspannung fortgesetzt werden. Bevorzugt wird diese Verpolung der Batterie optisch, akustisch oder über ein Fehlersignal über eine Busleitung angezeigt.

Wenn der Transistor 12 als Linearregler ausgebildet ist, kann mittels der Stromerfassungseinheit 13 und Ansteuerung des Linearreglers 12 eine Regelung des Batterieentladestroms und/oder Batterieladestroms auf einen vorgegebenen Sollwert ausgeführt werden. In vereinfachter Weise kann diese Regelung natürlich auch als Schutzschaltung ausgeführt werden, so dass bei einem allzu hohen Batterieladestrom oder Batterieentladestrom der Schalter 12 geöffnet wird, um die Batterie 4 zu schonen.

Anstelle des Linearreglers kann auch ein Schaltregler vorgesehen sein.

Bei sehr langem Ausfall der Netzspannung kann eine Tiefentladung der Batterie 4 auftreten. Wenn die Batterie 4 tiefentladen ist, weist sie eine Spannung von beispielsweise 1,3 Volt auf, die also unter der zulässigen Spannung von beispielsweise 1,5 Volt liegt. Selbst wenn nunmehr eine ordnungsgemäße Netzspannung eingangsseitig an der Ladeschaltung 3 anliegt, und die Ladeschaltung 3 in der oben beschriebenen Weise ordnungsgemäß betrieben wird, wird die tiefentladene Batterie 4 die Sekundärseite der Ladeschaltung auf den einen unzulässig niedrigen Wert ziehen.

Erfindungsgemäß kann diese Tiefentladung mittels Erfassung der Spannung der Batterie 4 erfasst werden. Bei Erfassung einer derartigen Tiefentladung wird der Schalter 12 vorzugsweise getaktet betrieben. Dabei wird vorzugsweise der Schalter 12 nur für eine verhältnismäßig kurzen Zeitraum geschlossen, wobei in diesem kurzen Zeitraum ein Ladevorgang der Batterie 4 erfolgt. Danach wird indessen der Schalter 12 wieder auf einen längeren Zeitraum geöffnet, so dass die Batterie 4 von der Sekundärseite der Ladeschaltung 3 abgetrennt ist und die Ladeschaltung 3 sekundärseitig wieder die ordnungsgemäße Spannung von beispielsweise 1,5 Volt bereitstellen kann. Somit liegt sekundärseitig während eines weit größeren Zeitraums ein ordnungsgemäßes Spannungsverhältnis vor.

Es liegt somit eine impulsförmige Ladung der tiefentladenen Batterie vor.

Während der Schalter 12 geöffnet ist, versorgt die eine wieder anliegende Netzspannung mittels der Ladeschaltung korrekt die angeschlossene LED-Treiberschaltung und LEDs. Bei kurzzeitig geschlossenem Schalter dagegen wird die Batterie schonend wieder aufgeladen. Beispielsweise kann das Tastverhältnis für den Schalter 12 derart gewählt sein, dass er nur während 10% der Gesamtzeitdauer geschlossen ist und entsprechend 90% geöffnet, so dass sich die Batterie in diesen 90% Zeitdauer erholen kann.

Bei erfasster Tiefentladung der Batterie mittels der Erfassung der Batteriespannung kann automatisch in diesem gepulsten Betrieb des Schalters 12 umgeschaltet werden. Vorzugsweise erfolgt die Überwachung der Batteriespannung über eine diskrete Schaltung und somit unabhängig vom Mikrocontroller 2 (siehe Figuren 1, 2), der ja womöglich bei zu niedriger Batteriespannung nicht voll funktionsfähig ist.

Im übrigen ist aus diesem Grund auch bevorzugt die Stromerfassungsschaltung 13 mit dem Komparator 14 als diskrete Schaltung und somit unabhängig vom Mikrocontroller 2 und dessen ordnungsgemäßem Betrieb gewählt.

## Patentansprüche

1. Notlichtgerät (1) zum Betreiben einer Lichtquelle, insbesondere einer LED, aufweisend:

   • eine Batterie (4),
   • eine mit einer Netzversorgungsspannung ($U_{in}$) zu versorgende Ladeschaltung (3) zum Laden der Batterie (4), sowie
   • eine während eines Notlichtbetriebs durch die Batterie (4) versorgte Treiberschaltung (5) zum Betreiben der Lichtquelle,

   **dadurch gekennzeichnet,**

**dass** ein Schalter (12) in Serie zu der Batterie (4) geschaltet ist, über den die Batterie selektiv abtrennbar ist,
wobei der Schalter (12) derart verschaltet ist, dass bei geöffnetem Schalter (12) eine anliegende Netzversorgungsspannung ($U_{IN}$) mittels der Ladeschaltung (3) die Treiberschaltung (5) versorgt.

2. Notlichtgerät nach Anspruch 1,
wobei der Schalter (12) in Serie zu der Batterie ein als Linearregler von der Steuereinheit (2) betreibbarer Transistor ist.

3. Notlichtgerät nach Anspruch 1 oder 2,
wobei bei Tiefentladung der Batterie (4) der Schalter (12) in Serie zu der Batterie (4) in einen gepulsten Betrieb ansteuerbar ist.

4. Notlichtgerät nach Anspruch 3,
wobei zur Erfassung der Tiefentladung der Batterie eine diskrete Batteriespannung-Erfassungsschaltung vorgesehen ist.

5. Notlichtgerät nach Anspruch 3 oder 4,
bei dem bei Erfassung einer Tiefentladung der Batterie der Schalter in jedem Taktzyklus mit einem Tastverhältnis von weniger als 50%, vorzugsweise weniger als 20% geschlossen ist.

6. Notlichtgerät nach einem der vorhergehenden Ansprüche, bei dem ein Messwiderstand in Serie zu dem Schalter geschaltet ist, der in Serie zu der Batterie (4) geschaltet ist.

7. Notlichtgerät nach einem der vorhergehenden Ansprüche,
**dadurch gekennzeichnet,**
**dass** die Ladeschaltung (3) einen steuerbaren Schalter (S1) aufweist, welcher durch die Steuereinheit (2) angesteuert wird.

8. Notlichtgerät nach Anspruch 7,
**dadurch gekennzeichnet,**
**dass** die Ladeschaltung (3) durch einen Flyback-Konverter gebildet ist.

9. Notlichtgerät nach Anspruch 8,
**dadurch gekennzeichnet,**
**dass** die Steuereinheit (2) den Zustand der Netzversorgungsspannung ($U_{in}$) unter Berücksichtigung eines Duty-Cycles (D1) zur Ansteuerung des Schalters (S1) sowie der gemessenen Sekundärspannung ($U_{flb2}$) des Flyback-Konverters oder der Spannung der Sekundärwicklung des Flyback-Konverters ermittelt.

10. Notlichtgerät nach einem der Ansprüche 1 bis 9,
**dadurch gekennzeichnet,**
**dass** die Steuereinheit (2) den Zustand der Netzversorgungsspannung ($U_{in}$) unter Berücksichtigung eines Duty-Cycles (D1) zur Ansteuerung des Schalters (S1) sowie der Ladeleistung ($P_{flb2}$) für die Energiespeichereinheit (4) ermittelt.

11. Notlichtgerät nach Anspruch 10,
**dadurch gekennzeichnet,**
**dass** die Steuereinheit (2) die Ladeleistung ($P_{flb2}$) für die Energiespeichereinheit (4) durch Messung des durch die Energiespeichereinheit (4) fließenden Stroms ($I_{bat}$) sowie der daran anliegenden Spannung ($U_{bat}$) bestimmt.

12. Notlichtgerät nach einem der vorhergehenden Ansprüche,
**dadurch gekennzeichnet,**
**dass** die Steuereinheit (2) die Netzversorgungsspannung ($U_{in}$) durch Vergleich bekannter bzw. gemessener Betriebsgrößen mit einer in der Steuereinheit (2) hinterlegten Wertetabelle bestimmt.

13. Notlichtgerät nach einem der vorherigen Ansprüche,
**dadurch gekennzeichnet,**
**dass** die Treiberschaltung (5) als Schaltregler ausgebildet ist und einen durch die Steuereinheit (2) angesteuerten steuerbaren Schalter (S2) aufweist.

14. Notlichtgerät nach Anspruch 13,
**dadurch gekennzeichnet,**
**dass** die Steuereinheit (2) die Treiberschaltung (5) derart ansteuert, dass die Lichtquelle unabhängig vom Ladezustand der Energiespeichereinheit (4) mit einer konstanten Leistung ($P_{led}$) oder konstantem Strom ($I_{led}$) betrieben wird.

## Claims

1. An emergency lighting device (1) for operating a light source, in particular an LED, including:

   • a battery (4),
   • a charging circuit (3), to be supplied with a mains supply voltage ($U_{in}$), for charging the battery (4), and also
   • a driver circuit (5), supplied by the battery (4) during emergency lighting operation, for operating the light source,

   **characterised in that**
   a switch (12) is connected in series with the battery (4), via which the battery is capable of being cut off selectively,
   the switch (12) being interconnected in such a manner that when the switch (12) is open an applied mains supply voltage ($U_{IN}$) supplies the driver circuit (5) by means of the charging circuit (3).

**2.** An emergency lighting device according to Claim 1, wherein the switch (12) in series with the battery is a transistor that is capable of being operated as a linear regulator by the control unit (2).

**3.** An emergency lighting device according to Claim 1 or 2,
wherein in the event of excessive discharge of the battery (4) the switch (12) in series with the battery (4) is capable of being triggered into pulsed operation.

**4.** An emergency lighting device according to Claim 3, wherein for the purpose of registering the excessive discharge of the battery a discrete circuit for registering the battery voltage is provided.

**5.** An emergency lighting device according to Claim 3 or 4,
wherein in the event of an excessive discharge of the battery being registered the switch is closed in each clock cycle with a pulse duty factor of less than 50 %, preferably less than 20 %.

**6.** An emergency lighting device according to one of the preceding claims,
wherein a measuring resistor is connected in series with the switch that is connected in series with the battery (4).

**7.** An emergency lighting device according to one of the preceding claims,
**characterised in that**
the charging circuit (3) includes a controllable switch (S1) which is triggered by the control unit (2).

**8.** An emergency lighting device according to Claim 7,
**characterised in that**
the charging circuit (3) is constituted by a flyback converter.

**9.** An emergency lighting device according to Claim 8,
**characterised in that**
the control unit (2) ascertains the state of the mains supply voltage ($U_{in}$), taking account of a duty cycle (D1) for triggering the switch (S1) and also of the measured secondary voltage ($U_{flb2}$) of the flyback converter or of the voltage of the secondary winding of the flyback converter.

**10.** An emergency lighting device according to one of Claims 1 to 9,
**characterised in that**
the control unit (2) ascertains the state of the mains supply voltage ($U_{in}$), taking account of a duty cycle (D1) for triggering the switch (S1) and also of the charging power ($P_{flb2}$) for the energy storage unit (4).

**11.** An emergency lighting device according to Claim 10,
**characterised in that**
the control unit (2) determines the charging power ($P_{flb2}$) for the energy storage unit (4) by measurement of the current ($I_{bat}$) flowing through the energy storage unit (4) and also of the voltage ($U_{bat}$) applied thereto.

**12.** An emergency lighting device according to one of the preceding claims,
**characterised in that**
the control unit (2) determines the mains supply voltage ($U_{in}$) by comparison of known or measured operating variables with a table of values saved in the control unit (2).

**13.** An emergency lighting device according to one of the previous claims,
**characterised in that**
the driver circuit (5) takes the form of a switching regulator and exhibits a controllable switch (S2) triggered by the control unit (2).

**14.** An emergency lighting device according to Claim 13,
**characterised in that**
the control unit (2) triggers the driver circuit (5) in such a manner that the light source is operated with a constant power ($P_{led}$) or with constant current ($I_{led}$) irrespective of the state of charge of the energy storage unit (4).

**Revendications**

**1.** Appareil d'éclairage de secours (1) pour faire fonctionner une source de lumière, en particulier une LED, présentant :

- une batterie (4),
- un circuit de chargement (3), à alimenter avec une tension d'alimentation de réseau (Uin), pour charger la batterie (4), ainsi que
- un circuit d'attaque (5), alimenté pendant le fonctionnement en éclairage de secours par la batterie (4), pour faire fonctionner la source de lumière,

**caractérisé en ce que**
un commutateur (12) est connecté en série avec la batterie (4), la batterie pouvant être coupée de manière sélective via celui-ci,
le commutateur (12) étant connecté de manière à ce que, quand le commutateur (12) est ouvert, une tension d'alimentation de réseau (Uin) appliquée alimente le circuit d'attaque (5) par le biais du circuit de chargement (3).

**2.** Appareil d'éclairage de secours selon la revendication 1,

le commutateur (12) en série avec la batterie étant un transistor pouvant être actionné comme régulateur linéaire par l'unité de commande (2).

3. Appareil d'éclairage de secours selon la revendication 1 ou 2,

dans le cas d'une décharge profonde de la batterie (4), le commutateur (12) en série avec la batterie (4) pouvant être commandé dans un fonctionnement par impulsion.

4. Appareil d'éclairage de secours selon la revendication 3,

un circuit discret de détection de tension de batterie étant prévu pour la détection de la décharge profonde de la batterie.

5. Appareil d'éclairage de secours selon la revendication 3 ou 4,

dans le cas d'une détection d'une décharge profonde de la batterie, le commutateur étant fermé dans chaque cycle de commutation avec un rapport cyclique de moins de 50%, de préférence moins de 20%.

6. Appareil d'éclairage de secours selon l'une des revendications précédentes,

une résistance de mesure étant connectée en série avec le commutateur qui est connecté en série avec la batterie (4).

7. Appareil d'éclairage de secours selon l'une des revendications précédentes,

**caractérisé en ce que**

le circuit de chargement (3) présente un commutateur (S1) pouvant être commandé, lequel commutateur (S1) est commandé par l'unité de commande (2).

8. Appareil d'éclairage de secours selon la revendication 7,

**caractérisé en ce que**

le circuit de chargement (3) est constitué d'un convertisseur Flyback.

9. Appareil d'éclairage de secours selon la revendication 8,

**caractérisé en ce que**

l'unité de commande (2) détermine l'état de la tension d'alimentation de réseau (Uin) compte tenu d'un rapport cyclique (D1) pour la commande du commutateur (S1) ainsi que de la tension secondaire (Uf1b2) mesurée du convertisseur Flyback ou de la tension de l'enroulement secondaire du convertisseur Flyback.

10. Appareil d'éclairage de secours selon l'une des revendications 1 à 9,

**caractérisé en ce que**

l'unité de commande (2) détermine l'état de la tension d'alimentation de réseau (Uin) compte tenu d'un rapport cyclique (D1) pour la commande du commutateur (S1) ainsi que de la puissance de chargement (Pf1b2) pour l'unité de stockage d'énergie (4)

11. Appareil d'éclairage de secours selon la revendication 10,

**caractérisé en ce que**

l'unité de commande (2) détermine la puissance de chargement (Pflb2) pour l'unité de stockage d'énergie (4) par une mesure du courant (Ibat) circulant à travers l'unité de stockage d'énergie (4) ainsi que de la tension (Ubat) à ses bornes.

12. Appareil d'éclairage de secours selon l'une des revendications précédentes,

**caractérisé en ce que** l'unité de commande (2) détermine la tension d'alimentation de réseau (Uin) en comparant des valeurs de fonctionnement connues ou mesurées avec un tableau de valeurs se trouvant dans l'unité de commande (2).

13. Appareil d'éclairage de secours selon l'une des revendications précédentes,

**caractérisé en ce que**

le circuit d'attaque (5) est arrangé en contrôleur à commutateur bistable et présente un commutateur (S2) commandable commandé par l'unité de commande (2).

14. Appareil d'éclairage de secours selon la revendication 13,

**caractérisé en ce que**

l'unité de commande (2) commande le circuit d'attaque (5) de telle façon que la source de lumière fonctionne indépendamment de l'état de chargement de l'unité de stockage d'énergie (4) avec une puissance (Pled) constante ou un courant (Iled) constant.

Fig. 1

Fig. 2

Fig. 3

Fig. 4

Fig. 5

LED
Treiber

5

Ladeschaltung

3

Steuerschaltung

2

Stromerfassung

14

13

Externe Steuereinheit

10

11

Ubat

Ibat

Iflb2

4

12

15

16

**IN DER BESCHREIBUNG AUFGEFÜHRTE DOKUMENTE**

**In der Beschreibung aufgeführte Patentdokumente**

- EP 1202428 A
- EP 0948241 A